# EUROPEAN PATENT APPLICATION

(11) **EP 4 808 113 A1**
(43) Date of publication of application: **16.09.2026**
(21) Application number: 26162953.9
(22) Date of filing: 06.03.2026
(51) Int. Cl.: H04N 7/18, G08B 13/196

(54) **INTELLIGENT EVENT-BASED PRIORITIZATION AND DISPLAY OF MULTIPLE VIDEO STREAMING DATA**

(30) Priority: 10.03.2025 US 202519075498
(71) Applicant: Roku, Inc., San Jose, CA 95110 (US)
(72) Inventor: CHEN, Louis W., San Jose, 95110 (US); RIISE, Soren, San Jose, 95110 (US); GARNER, Gregory Mark, San Jose, 95110 (US); BROUILLETTE, Patrick Alan, San Jose, 95110 (US); RAMESH, Sunil, San Jose, 95110 (US)
(74) Representative: Yang, Shu

(57) **Abstract**

Disclosed herein are system, apparatus, article of manufacture, method and/or computer program product aspects, and/or combinations and sub-combinations thereof, for providing event-based prioritization and display of a plurality of video streams within a monitoring system. An example aspect operates by receiving continuous event stream which can include video streaming data from multiple video monitoring devices. The method includes identifying events in the streaming data and determining a prioritization for each of the detected events. The identification and prioritization of detected events may be further personalized based on user information. The method may then display the video streams within a visualization interface based on the detected events and prioritization.

## Description

### BACKGROUND

This application claims priority to U.S. Non-Provisional application 19/075,498 filed on March 10, 2025, which is incorporated by reference herein in its entirety.

### FIELD

This disclosure is generally directed to intelligent event-based switching between video streams within a monitoring system that can deploy multiple monitoring and smart devices including security cameras, video doorbells, light bulbs, and smart outlets.

### SUMMARY

Provided herein are system, apparatus, article of manufacture, method and/or computer program product aspects, and/or combinations and sub-combinations thereof, for intelligent event-based prioritization and display of video streaming data provided by multiple monitoring devices. In embodiments, an monitoring environment associated with a particular user account includes multiple monitoring devices including video monitoring devices that provide multiple video streams. Event detection using video processing algorithms is performed on the multiple video streams to identify events within each of the video streams. In some aspects, the events may be generic predefined events that are not personalized to the user account. In some aspects, the generic predefined events may be personalized based on user prioritization information that describes events that are specific to each user account. Examples of personalization include detecting specific people (e.g., family members), objects (e.g., dog, cat), and activities (e.g., running, falling). Event data from the multiple video streams may be provided as an event stream that provides a summary of detected events within each of the provided video streams.

In some aspects, a visualization interface is generated for displaying the video streams based on the provided event stream which details different events within each of the video streams. In some aspects, a continuous event stream that includes events detected in the video streaming data that is provided by multiple video monitoring devices. The video streaming data can include first video streaming data from a video monitoring device and second video streaming data from another video monitoring device. A monitoring engine associated with the visualization interface may be configured to identify predefined events within the continuous event stream with each predefined event being associated with the video streaming data. The predefined events may be assigned priorities by the monitoring engine and based on user prioritization information, which can be used to personalize the detected events to people, objects, or activities that specific to the user account.

In some aspects, the visualization interface is configured to display the various video streams based on the identified events within each respective video stream and based on the priority information that is given to each event. For example, the visualization interface may prioritize displaying a video stream that includes a detected event that has a priority than other events detected in other video streams provided to the visualization interface.

In some aspects, the visualization interface is configured to switch between displaying video streams within a viewing window in the interface. Switching between the different video streams is based on detected events and may be done automatically or manually. Automatic switching between different video streams can be implemented based on new events that are provided via the continuous event stream and based on events that are no longer occurring within a video stream and are removed from the continuous event stream. Automatic switching of video streams can be configured based on new events being detected and provided via the continuous event stream and old events are removed from the continuous event stream.

### BRIEF DESCRIPTION OF THE FIGURES

The accompanying drawings are incorporated herein and form a part of the specification.
FIG. 1 illustrates a block diagram of a multimedia environment, according to some aspects.
FIG. 2 illustrates a block diagram of a streaming media device, according to some aspects.
FIG. 3 illustrates a block diagram of a monitoring environment, according to some aspects.
FIG. 4A illustrates a block diagram of a monitoring environment and visualization interface, according to some aspects.
FIGs. 4B and 4C illustrate visualization interfaces, according to some aspects.
FIG. 5 illustrates an event stream, according to some aspects.
FIG. 6 illustrates a flowchart depicting a method for providing event streams to a visualization interface, according to some aspects.
FIG. 7 illustrates a flowchart depicting a method for processing events in event, according to some aspects.
FIG. 8 illustrates a flowchart depicting a method for providing event streams to a visualization interface, according to some aspects

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product aspects, and/or combinations and sub-combinations thereof, for intelligent event-based switching between video streams within a monitoring system that can deploy multiple monitoring and smart devices including security cameras, video doorbells, light bulbs, and smart outlets.

As used in the specification and the appended claims, "content items" may also be referred to as "content," "content data," "content information," "content asset," "multimedia asset data file," or simply "data" or "information". Content items may be any information or data that may be licensed to one or more individuals (or other entities, such as businesses or groups). Content may be electronic representations of video, audio, text, graphics, or the like which may be but is not limited to electronic representations of videos, movies, or other multimedia, which may be but is not limited to data files adhering to MPEG2, MPEG, MPEG4 UHD, HDR, 4k, Adobe^{®} Flash^{®} Video (.FLV) format or some other video file format whether the format is presently known or developed in the future. The content items described herein may be electronic representations of music, spoken words, or other audio, which may be but is not limited to data files adhering to the MPEG1 Audio Layer 3 (.MP3) format, Adobe^{®}, CableLabs 1.0,1.1, 3.0, AVC, HEVC, H.264, Nielsen watermarks, V-chip data and Secondary Audio Programs (SAP), Sound Document (.ASND) format, or some other format configured to store electronic audio whether the format is presently known or developed in the future. In some cases, content may be data files adhering to the following formats: Portable Document Format (.PDF), Electronic Publication (.EPUB) format created by the International Digital Publishing Forum (IDPF), JPEG (.JPG) format, Portable Network Graphics (.PNG) format, dynamic ad insertion data (.csv), Adobe^{®} Photoshope (.PSD) format or some other format for electronically storing text, graphics and/or other information whether the format is presently known or developed in the future. Content items may be any combination of the above-described formats.

Environments may deploy a monitoring system with a variety of monitoring devices for enabling intelligent event-based switching of video streams. Current monitoring systems that deploy multiple monitoring devices potentially results in multiple video streams being simultaneously streamed to a user device. Conventional systems attempt to deal with the multiple video streams with a simple trigger, such as motion detection, when determining which video stream to emphasize for display on a user device. But switching between different video streams based on simple triggers could lead to a "ping-pong" effect when displaying the video streams, quickly switching between displaying two or more video streams. Moreover, simple triggers do not take into account a number of factors for surfacing events that are more relevant or of interest to a user.

The technological solution for solving this problem provides video processing algorithms for processing video streams to identify predefined events. In some aspects, video processing algorithms may be implemented a visual processing model. In some aspects, predefined events are specific to a user associated with a user device for displaying the visualization interface and video streams. In some aspects, a visual language model may be trained based on user data for identifying predefined events specific to the user.

In some aspects, the video processing algorithms of this disclosure are applied to video streams as that are streamed to a user device for identifying events within the one or more of the video streams. For example, the video processing algorithms may be applied at a monitoring engine to video streams as they are being delivered by video monitoring devices (e.g., indoor security camera, outdoor security camera, video doorbell, baby monitors, other types of camera-based devices).

In some aspects, output of the video processing algorithms on video streams are event streams which include events detected in one or more of the video streams. The video processing algorithms may be applied within battery-powered video monitors (e.g., cameras) that operate on battery or video monitors connected to an electricity source. According to some aspects, the video monitors may be implemented as one or more stationary cameras. The stationary camera may be a low power edge device. The stationary camera may be a battery-operated camera or a camera connected to an electricity source. Additionally, or alternatively, the video monitors may be implemented in one or more moving cameras. A moving camera may be a battery-operated camera or a camera connected to an electricity source.

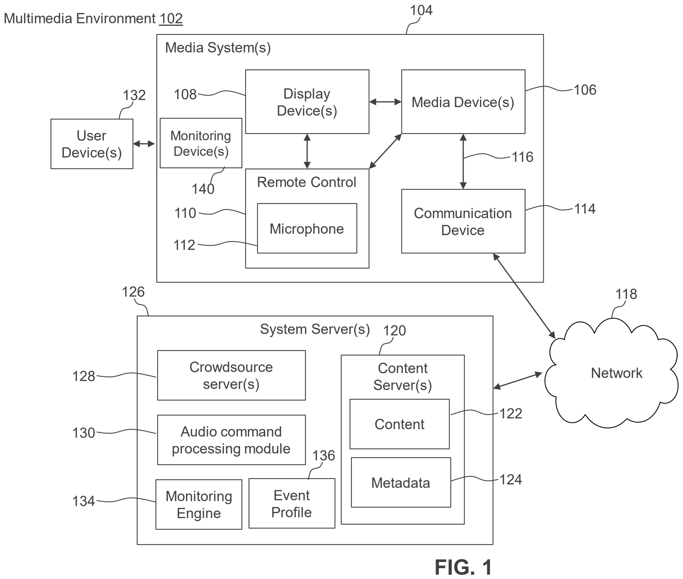

Various aspects of this disclosure may be implemented using and/or may be part of a multimedia environment 102 shown in FIG. 1. It is noted, however, that multimedia environment 102 is provided solely for illustrative purposes, and is not limiting. Aspects of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102 including monitoring device(s) 140 and a monitoring engine 134 for providing monitored video streams for distribution within multiple environment 102 including delivery to user devices 132, according to some aspects. Multimedia environment 102 illustrates an example environment, architecture, ecosystem, etc., in which various aspects of this disclosure may be implemented. However, multimedia environment 102 is provided solely for illustrative purposes, and is not limiting. Aspects of this disclosure may be implemented and/or used in environments different from and/or in addition to multimedia environment 102 of FIG. 1, as will be appreciated by persons skilled in the relevant art(s) based on the teachings contained herein.

In a non-limiting example, multimedia environment 102 may be directed to streaming media, including streaming content provided by one or more monitoring device(s) 140. However, this disclosure is applicable to any type of media (instead of or in addition to streaming media), as well as any mechanism, means, protocol, method and/or process for distributing media. For example, the multimedia environment 102 may implement and/or connect to one or more cameras. The streaming data may include streaming video streams and/or camera feeds from the camera(s) to one or more display devices and/or user devices. According to some aspects, the user devices may include wireless communication devices, smart phones, laptops, desktops, tablets, personal assistants, monitors, televisions, wearable devices, gaming devices, Internet of Thing (IoT) devices
Monitoring device(s) 140 may include video monitoring devices capable of capturing and streaming video and audio data, as noted above, and non-video monitoring devices, which capture any non-video data, such as audio data, power information (e.g., from smart outlets), temperature data, and the like. Monitoring device(s) are configured to stream monitored data to monitoring engine 134. In some aspects, monitoring engine 132 is implemented on a device remote from (e.g., connected to different wireless networks or routers) monitoring device(s) 140, as depicted in FIG. 1. In some aspects, monitoring engine 132 is implemented on a device local to (e.g., connected to the same wireless network or router) as monitoring device(s) 140. In some aspects, functions of monitoring engine 132 may be distributed between local (e.g., media device(s) 106) and remote (e.g., system server 126) implementations.

In some aspects, monitoring device(s) 140 may be implemented locally to each other (e.g., connected to the same wireless network), remote from each other (e.g., connected to different wireless networks), or a combination of both. Regardless of implementation, monitoring device(s) 140 may be linked to a common user account to enable video streams to be provided to the same visualization interface that is associated with the user account. In this manner, visualization information can be configured stream and display video data from all monitoring device(s) 140 associated with the user account regardless if the monitoring device(s) 140 are implemented locally to and/or remotely from each other.

Monitoring engine 132 may be configured to communicate with a visualization interface installed on user device(s) 132. Visualization interface may be configured as part of a monitoring application installed on user device(s) 132. In some aspects, the monitoring engine 132 may be configured to prevent streaming to user device(s) 132 until monitoring application is installed on user device(s). In some aspects, visualization interface may be provided on one or more multiple devices including user device(s) 132, media device(s) 106, and display device 108.

In some aspects, monitoring engine 132 may include a visual language model that is initially trained to perform image recognition on video data to identify events within the video data. In some aspects, the visual language model may further be trained to detect predefined events associated with user device(s) 132. Accordingly, the visual language model may be personalized to identify events that are specific to different user device(s) 132. Examples of this personalization include training the visual language model to identify specific users (e.g., family members, friends, mailman), specific objects (e.g., dogs, cats), specific actions (e.g., movements in certain locations, family activities). In some aspects, visual language model may further be trained to identify anomalous activity which may include events that do not fit into predefined events that are associated with user device(s) 132.

The multimedia environment 102 may include one or more media systems 104. A media system 104 comprises many devices and can be implemented within a single location, or in distributed locations, such as in one or more of a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. For example, there may be one or more display devices 108 of media system 104 with each display device 108 being located in a separate location. User device device(s) 132 may operate the media system 104 to select and view content, such as content 122. This may include viewing video streams from one or more cameras.

Each media system 104 may include one or more media device(s) 106 each coupled to one or more display device(s) 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, a streaming set-top box (STB), cable and satellite STB, a DVD or BLU-RAY device, an audio/video playback device, a cable box, and/or a digital video recording device, to name just a few examples. Display device 108 may be a monitor, a television (TV), a computer, a computer monitor, a smart phone, a tablet, a wearable (such as a watch or glasses), an appliance, an internet of things (IoT) device, and/or a projector, to name just a few examples. In some aspects, media device 106 can be a part of, integrated with, operatively coupled to, and/or connected to its respective display device 108.

Each media device 106 may be configured to communicate with network 118 via a communication device 114. The communication device 114 may include, for example, a cable modem or satellite TV transceiver. The media device 106 may communicate with the communication device 114 over a link 116, wherein the link 116 may include wireless (such as WiFi) and/or wired connections. In some aspects, communication device 114 can be a part of, integrated with, operatively coupled to, and/or connected to a respective media device 106 and/or a respective display device 108.

In various aspects, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 can be any component, part, apparatus and/or method for controlling the media device 106 and/or display device 108, such as a remote control, a tablet, laptop computer, smartphone, wearable, on-screen controls, integrated control buttons, audio controls, or any combination thereof, to name just a few examples. In an embodiment, the remote control 110 wirelessly communicates with the media device 106 and/or display device 108 using cellular, Bluetooth, infrared, etc., or any combination thereof. The remote control 110 may include a microphone 112, which is further described below. When implemented as a smartphone or tablet, operations of the remote control 110 may be provided by a software program installed on the smartphone or tablet that provide a user interface that includes controls of the remote control 110. In some aspects, remote control 110 may also be configured to install a monitoring application that is configured to communicate with monitoring engine 134.

The multimedia environment 102 may include a plurality of content server(s) 120 (also called content providers, channels, or sources). Although only one content server 120 is shown in FIG. 1, in practice the multimedia environment 102 may include any number of content server(s) 120. Each content server 120 may be configured to communicate with network 118. Each content server 120 may be configured to communicate with network 118. Content server 120, media device 106, display device 108, may be collectively referred to as a media device, which may be an extension of media system 104. In some aspects, a media device may include system server 126 as well.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form. Content 122 may be the source displayed on display device 108.

Content 122 may further include video streaming data provided by monitoring device(s) 140. Monitoring device(s) 140 may be configured to be streamed in a continuous manner to system server(s) 126 for storage in content server 120 and for processing by monitoring engine 134. In some aspects, monitoring device(s) 140 that operate based on a sleep-wake modes (e.g., battery powered cameras, low power cameras) may be configured for burst streaming of video streaming data while the monitoring device is awake. While awake, monitoring device(s) 140 may continuously stream video data. In some aspects, monitoring device(s) 140 that operate in an always-on mode (e.g., connected to electrical power) may also continuously stream video data as needed or on a schedule, but may also be configured to stream video continuously while the monitoring device(s) are on.

Content 122 may further include non-video data provided by non-video monitoring devices such as home devices with "smart" functionality that include sensors for capturing non-visual information and network connectivity for transmitting the captured non-visual information over network 118. In some aspects, non-video data includes power usage, energy consumption, on/off status, open/closed status (e.g., for door/window sensors), timestamps of activity (e.g., when turned on, duration of use), motion activity, temperature information (e.g., from smart thermostats), door lock/unlock status (e.g., from smart locks or other access control systems), ambient light levels (e.g., from smart light sensors).

In some aspects, metadata 124 comprises data about content 122. For example, metadata 124 may include closed captioning data, such as text data, associated with content 122. Metadata 124 may further include timeslots that link the closed captioning data to the audio data of content 122. The timeslots allow the display of the closed captioning data by display device 108 to be synced with the playback of audio data of content 122 such that the text provided by the closed captioning data matches the timeslot when the audio data is played such as by display device 108 or another sound playback device.

Metadata 124 may further include video streaming data, such as event data generated by monitoring engine 134. Event data may include labels of events detected within the video streaming data such as detected people (e.g., facial recognition, speech recognition), detected objects (e.g., object detection), detected activity (e.g., sound events such as glass breaking, dogs barking, doors opening, floors creaking, specific actions such as cooking, falling, accidents, sitting).

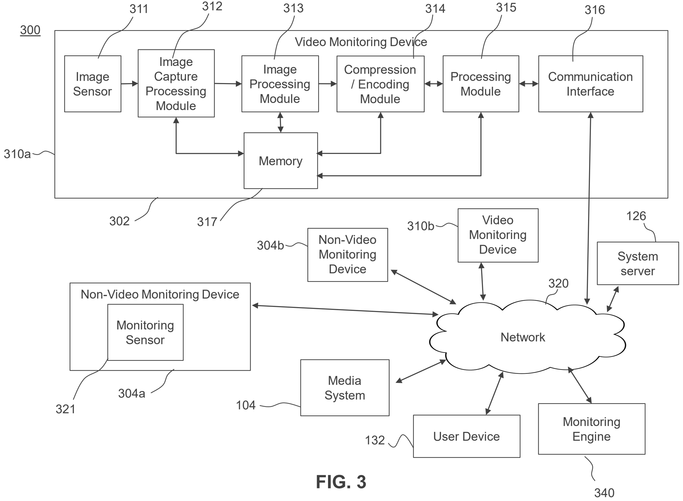

Metadata 124 may further include indicating or related to labels of the materials in the content 122, writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index. In some aspects, content 122 can include a plurality of content items, and each content item can include a plurality of frames having metadata about the corresponding frame (see FIG. 3).

Content 122 and metadata 124 may be utilized to generate an account-specific event profile 136 that includes content 122 and metadata 124 that are derived from all video streaming data that is associated with a common user account. Accordingly, there can be different event profiles for different user accounts. Alternatively or additionally, event profile 136 may be stored locally on media device(s) 136. Monitoring engine 134 can be configured to generate and update event profile 136 as needed based on video streaming data and non-video data provided by monitoring device(s) 140 that are linked via the common account.

The multimedia environment 102 may include one or more system server(s) 126. The system server(s) 126 may operate to support the media device(s) 106 from the cloud. It is noted that the structural and functional aspects of the system server(s) 126 may wholly or partially exist in the same or different ones of the system server(s) 126. System server(s) 126 and content server 120 together may be referred to as a media server system. An overall media device may include a media server system and media system 104. In some aspects, a media device may refer to the overall media device including the media server system and media system 104.

The media device(s) 106 may exist in thousands or millions of media systems 104. Accordingly, the media device(s) 106 may lend themselves to crowdsourcing aspects and, thus, the system server(s) 126 may include one or more crowdsource servers 128.

For example, using information received from the media device(s) 106 in the thousands and millions of media systems 104, the crowdsource server(s) 128 may identify similarities and overlaps between event data received by one or more monitoring engines. Based on such information, the crowdsource server(s) 128 may identify patterns, trends, or other similarities in event data, such as specific actions or activities. Such crowdsourced data may be used to further train monitoring engine 134 to improve the accuracy of event detection for video streaming data. Based on these identified patterns, monitoring engine 134 may generate suggestions for creating predefined events (e.g., for detecting people, detecting objects, detecting activity).

In some aspects, the audio data received by the microphone 112 in the remote control 110 is transferred to the media device 106, which is then forwarded to the trigger processing module 130 which may be implemented in the system server(s) 126 or in media device 106. The trigger processing module 130 may operate to process and analyze the received audio data to detect the trigger and may initiate (cause the one or more media devices 106 to initiate) the content enhancement protocol.

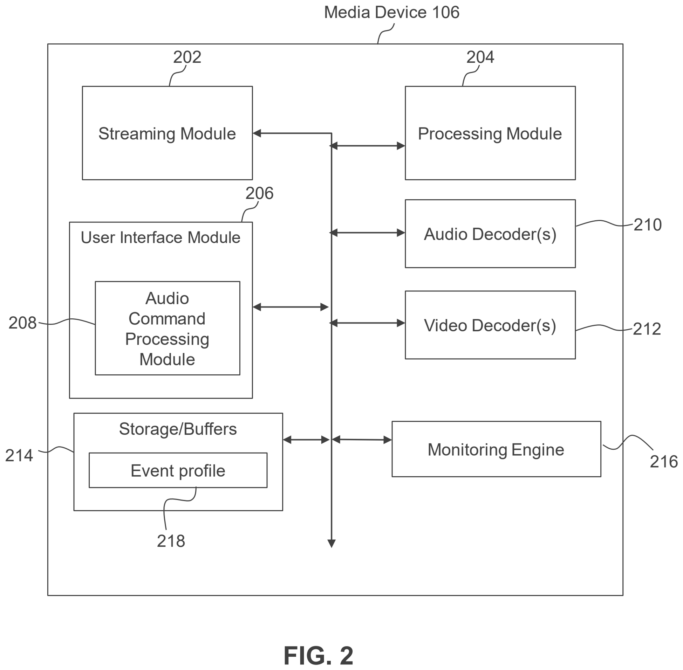

FIG. 2 illustrates a block diagram of an example media device(s) 106, according to some aspects. Media device(s) 106 may include a streaming module 202, processing module 204, user interface module 206, audio decoder(s) 210, video decoder(s) 212, storage/buffers 214, and monitoring engine 216. User interface module 206 may include the audio command processing module 216 and storage/buggers 214 is configured to store event profile 218.

Monitoring engine 216 is configured to receive streaming video data from one or more monitoring device(s) 140. In some aspects, the streaming video data may be provided locally from monitoring device(s) 140 (e.g., via a streaming connection on the same network between monitoring device(s) and media device 106). In some aspects, the streaming video data may be provided remotely to media device 106 (e.g., from content server(s) 120).

Streaming video data may be provided to monitoring engine 216 in different formats and the actions performed by monitoring engine 216 may be configured based on the different formatting of streaming video data. In some aspects, streaming video data is provided as a raw stream or as an already processed stream to monitoring engine 216. When provided as a raw stream, monitoring engine 216 can be configured to perform event detection on the video streaming data including functions for image recognition, audio recognition, object detection, and facial recognition, to detect potential events within the video streaming data. In some aspects, monitoring engine 216 may implement a visual language model that is trained to identify predefined events that can be applied generally to multiple users (e.g., movement in a specific room such as a kitchen, sounds such as breaking glass, open doors or windows). In some aspects, the visual language model may be further trained to identify personalized predefined events that are specific to a user account. Such personalized predefined events may include recognizing specific family members (e.g., wife, husband, kids), specific objects (e.g., dog, cat, windows, doors), and specific actions (e.g., running, falling). The visual language model may be implemented to receive streaming video data and user preferences and information as inputs for training the visual language model to identify the personalized predefined events. For example, an account profile may include labeled images of family members and objects that can be used as training and/or inputs to the visual language model to identify specific people that are associated with the account.

Personalizing predefined events enables monitoring engine 216 to perform additional event-based functions such as ranked priority of different events and generating visualization elements such as icons to associate with different events. For example, monitoring engine 216 can be configured to organize detected events from streaming video data based on the detected people or objects, prioritize the detected events based on the detected people or objects, and generate a visualization sequence for displaying the streaming video data based on the detected people or objects. In some aspects, the visualization sequence may include a scheduled sequence for displaying video streams from one or more video monitoring devices based on the detected events. For example, user prioritization information may specify that an event involving a child is given higher priority than an event involving the family dog or cat. Accordingly, monitoring engine 216 may prioritize display the video stream (e.g., from a first video monitoring device) that has the detected event involving the child within the visualization interface of user device(s) 132 over the video stream (e.g., from a different video monitoring device) that has the detected event involving the dog.

In some aspects, processing (e.g., event detection) of raw video streaming data from video monitoring devices may occur on a device local to user device(s) 132 (e.g., media device(s) 106) or remote from user device(s) 132 (e.g., system server(s) 126). In some aspects, event streams may be provided to user device(s) 132 with the detected events and prioritization information included in the event streams such that additional processing of the raw video streaming data is not required. In such aspects, user device (s) 132 may utilize the event stream to generate and update the visualization interface for displaying the video streaming data from the one or more video monitoring devices.

Storage/buffers 214 may include an event profile 218 which may store user prioritization information including information which can be used by monitoring engine 216 to personalize event detection of video streaming data. Examples of such user prioritization information includes user images, user sound data, predefined events, and scheduling/calendar data.

Media device(s) 106 can be configured receive user input, such as audio data, from user device(s) 132 via, for example, remote control 110. Other types of user input can include image data, infrared data, text data, and touching data, to name just some examples. In some aspects, trigger processing module 216 can be integrated into media device(s) 106. In some aspects, sensing module(s) 218 can be integrated to display device(s) 108, remote control 110, or any devices used by user device(s) 132 to interact with media systems 104.

Each audio decoder 210 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 212 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some aspects, an event detection system within multimedia environment 102 may be implemented via one or more interactions between user device(s) 132, media device 106, monitoring device(s) 140, monitoring engine 216 (if implemented locally) and/or monitoring engine 134 (if implemented remotely). In some aspects, monitoring device(s) 140 may provide monitoring data to system server(s) 126 and monitoring engine 134 for event processing and generation of an event stream for display by a visualization interface at user device(s) 132 and/or media device(s) 106. In some aspects, the streaming module 202 may receive the event stream from monitoring engine 216 and/or monitoring engine 134 and display the event stream within a visualization interface on user device(s) 132 and/or display device 108. In some aspects, a visualization interface installed on user device(s) 132 may directly receive event stream from monitoring engine 216 and/or monitoring engine 134 for display by the visualization interface.

In some aspects, monitoring engine 216 and/or monitoring engine 134 may include image recognition, object detection, sound recognition, and/or activity identification functions for processing the streaming video data to identify particular people, objects, sounds, and/or activities within the streaming video data. In some aspects, monitoring engine 216 and/or monitoring engine 134 may generate an event stream with generic (i.e., non-personalized) events based on the detected events. Examples of generic events include events that are not specific to specific user or objects that are associated with a user account (e.g., as specified by event profile 218). Generic events may be prioritized based on common priority information. For example, a breaking glass sound may be prioritized for viewing versus motion detection by a particular video monitoring camera (e.g., a video doorbell).

In some aspects, monitoring engine 216 and/or monitoring engine 134 may be further configured to generate a personalized event stream that associates locations (e.g., rooms where video monitoring devices are located) detected people, objects, sounds, and/or activities with user prioritization information to provide an additional layer for prioritizing events for display by visualization information. Event profile 218 may include user prioritization information that specifies priorities that are specific to user accounts such as priorities for specific people (baby, child, parent), specific objects (dog, cats), specific sounds (breaking glass, crying), and specific rooms within a monitored location (the user's home).

For example, motion detection in a particular room may be further refined to indicate the specific family member (e.g., wife, child) that was detected in association with the motion. Monitoring engine 216 may utilize the user prioritization information to prioritize display of the streaming video data. For example, user prioritization information may establish settings or preferences for which detected people, motion detection in the kitchen involving the wife may be prioritized below motion detection in the basement involving the child. Event profile 218 therefore enables personalization how video streams may be prioritized for display.

### Exemplary Monitoring System

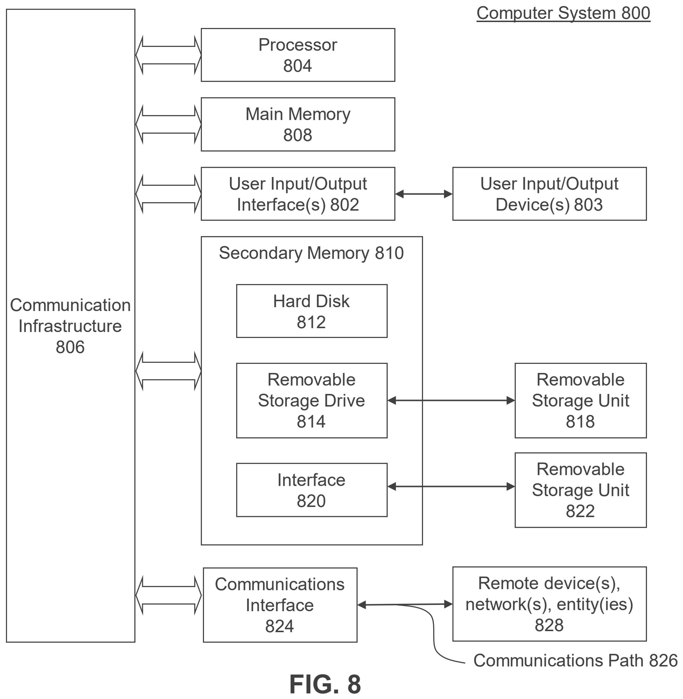

FIG. 3 illustrates a block diagram of a monitoring environment 300 implemented within multimedia environment 102, according to some aspects. Monitoring environment 300 includes monitoring device(s) 140, including video monitoring device 310a and video monitoring device 310b, non-video monitoring devices including non-video monitoring device 304a and non-video monitoring device 304b, a media system 104, a network 320, a user device 132, system server 126, and monitoring engine 340. Video monitoring devices and non-video monitoring devices can include one or more cameras, sensors, processors, memories, and/or may implement aspects of computer system 800 as described with reference to FIG. 8. Monitoring engine 340 may be implemented as monitoring engine 134 (implemented remotely from monitoring device(s) 140) or monitoring engine 216 (implemented locally to monitoring device(s) 140). Monitoring device(s) 140, including both video monitoring devices and non-video monitoring devices, media system 104, user device 132 may all be associated with a common user account. In such aspects, monitoring data from monitoring device(s) 140 that are implemented in different locations (e.g., different physical locations, connected to different networks) are be aggregated by monitoring engine 340 into a single event stream.

The number of video monitoring devices, non-video monitoring devices, media systems, user devices, system servers, and monitoring engines illustrated in FIG. 3 is exemplary and the aspects of this disclosure are not limited to this example and any number of video monitoring devices, non-video monitoring devices, media systems, user devices, system servers, and monitoring engines may be implemented as part of monitoring system 300. Also, although the user device 132 is illustrated separately from the media system 104, the user device 132 may be implemented as part of the media system 104.

Monitoring engine 340 may further configured to receive to receive monitoring data from one or more monitoring devices and perform event-based processing on the monitored data. According to some aspects, media system 104 and/or user device 132 may interface with the monitoring device(s) 140, including video monitoring devices including video monitoring device 310a and video monitoring device 310b and non-video monitoring devices including non-video monitoring device 304a and non-video monitoring device 304b. For example, video monitoring device 310a is configured to capture videos and/or images, process the captured videos and/or images, and transmit the processed videos and/or images to one or more of system server 126, media system 104, monitoring engine 340 and/or the user device 132 through the network 320. According to some aspects, network 320 may include any combination of routers, switches, access points, LANs, WANs, the Internet, network 118, and/or include wired and/or wireless communications.

A visualization interface implemented on user device 132 and/or media system 104 (in communication with display device(s) 108) is configured to display received event streams. The event stream may include raw streaming video data from video monitoring devices. In such embodiments, monitoring engine 340 may be implemented locally to a user device 132 and/or media system 104 and configured to process the event stream to perform event detection on the streaming video data. The processed event stream may include detected events and, if applicable, personalized predefined events associated with specific people, objects, and/or activities that are defined by user prioritization information. Monitoring engine 340 is then configured to provide the processed event stream to the visualization interface for display of the video streams in accordance with the detected events and, in some embodiments, user prioritization information for prioritizing display of events by the visualization interface.

Display device(s) 108 connected to media device(s) 106 may be a display of a smart phone, a display of a tablet, ad display of a computer, a display of a wearable device, a monitor, television (TV), another computer, another smart phone, another tablet, another wearable device (such as a watch or glasses), appliance, internet of things (IoT) device, and/or projector, to name just a few examples.

According to some aspects, video monitoring devices are configured to capture and transmit videos (and/or images) and non-video monitoring devices are configured to capture transmit non-video data that are ultimately processed by monitoring engine 340 for generating event streams and prioritizing events within the event streams.

According to some aspects, video monitoring devices and non-video monitoring devices are configured to communicate with local and remote devices within monitoring environment 300, such as media system 104, user device 132, monitoring engine 340, and system server 126. For example, media system 104 or user device 132 may transmit instructions and/or requests to video monitoring device 310a to trigger capturing of video data.

Additionally, or alternatively, media system 104 and/or user device(s) 132 may transmit instructions and/or requests to video monitoring device 310a to set and/or change one or more parameters. The parameters may include, but are not limited to, parameters associated to one or more lenses of video monitoring device 310a, movement parameters (e.g., to move video monitoring device 310a to capture different scene), scheduling (e.g., wake/sleep scheduling), or the like.

According to some aspects, video monitoring devices such as video monitoring device 310a may include an image sensor 311, an image capture processing module 312, an image processing module 313, a compression/encoding module 314, a processing module 315, a communication interface 316, and a memory 317. According to some aspects, the image capture processing module 312, the image processing module 313, the compression/encoding module 314, and the processing module 315 can be modules on one or more processors configured to perform operations discussed herein. According to some aspects, the image capture processing module 312, the image processing module 313, the compression/encoding module 314, and the processing module 315 can be modules on the same processor configured to perform operations discussed herein. According to some aspects, the image capture processing module 312, the image processing module 313, the compression/encoding module 314, and the processing module 315 can be modules on different processors configured to perform operations discussed herein. According to some aspects, one or more of the image capture processing module 312, the image processing module 313, the compression/encoding module 314, or the processing module 315 can include one or more processors configured to perform operations discussed herein. However, the aspects of this disclosure are not limited to these examples, and video monitoring device 310a may include other systems and/or modules.

The video monitoring device 310a captures pixels (also referred herein as image pixels and/or video pixels) using image sensor 311. Image sensor 311 may include any sensor that detects and conveys information used to form an image. For example, image sensor 311 may be a charge-coupled device (CCD), an active-pixel sensor, or the like. The aspects of this disclosure are not limited to these examples and other image sensors may be used. Image sensor 311 may be coupled to one or more lenses, aperture elements, electronic sensors, or the like.

According to some aspects, video monitoring device 310a may be configured to pre-process video data using one or more video processing algorithms before transmitting to other devices in monitoring environment 300. For example According to some aspects, one of the video processing algorithms performed by image processing module 313 may include a motion detection algorithm configured to detect and highlight motions in the video data. The detected motions within the video data can be further highlighted by the image processing module 313 for display to, for example, user device(s) 132. Additionally, or alternatively, detected motion within the video captured by the video monitoring device 310a are detected and further analyzed for detecting any abnormalities in the scene and/or the subject monitored by the video monitoring device 310a.

Other examples of video processing algorithms for event detection include performing initial steps of the event detection process including image recognition, object recognition, audio recognition, activity recognition, and event label generation for identifying detected people, objects, sounds, or activities.

Video processing features of video monitoring devices may depend on the type of video monitoring devices. Low power video monitoring devices may lack sufficient power or processing capability to perform video processing features and are configured to transmit video data without any pre-processing. In such embodiments, video processing algorithms for event detection may be performed on other devices that receive the video data from the video monitoring devices. Higher power video monitoring devices may have sufficient power and processing capability to perform pre-processing features as discussed above. Additionally or alternatively, video processing features for event detection may be implemented in monitoring engine 340.

In a non-limiting example, video monitoring devices may be implemented as cameras deployed within different locations (e.g., rooms) in one or more physical environments (e.g., a house). For example, video monitoring device 310a may be implemented in a bedroom and video monitoring device 310b may be implemented in a kitchen of a house.

Video processing algorithms implemented by image processing module 313 may be configured to detect motion, sounds, and activity within each deployed location. In some aspects, user prioritization information (associated with an account linked to monitoring environment 300) may include information about each room such as an activity schedule (e.g., sleeping between 10 pm to 7 am) and predefined people or objects (e.g., dog, a baby if the room is a baby room, mom and dad if the room is the master bedroom).

The video processing algorithms of image processing module 313 may be configured to pre-process video data to identify events and, in some embodiments, in combination with user prioritization information to label or tag the identified events. For example, event detection by image processing module 313 (alone or in combination with processing module 315) may be configured to detect and label detected motion and sounds and send the video data with the detected events to monitoring engine 340 for further processing and generation of event streams that aggregates video data from the video monitoring devices within monitoring environment 300. For example, monitoring engine 340 may be configured to further process video data received from one or more video monitoring devices, non-video data from non-video monitoring devices, and event profiles associated with the user account linked to monitoring environment 300, and perform additional event-based detection of the video data.

In another non-limiting example, video processing algorithms may be configured to detect biometric information in video data. Examples of biometric data include facial information, heart rate, blood pressure, breathing rate, and other biometric information. Monitoring engine 340 may be further configured to utilize the biometric information as part of event-based detection for identifying people associated with the user account and for generating labels or other visual icons associated with the identified people. For example, the event profile may provide preferences or setting for people associated with the account, such as family members. The preferences may include labels or icons to be displayed in association with the detected people.

In another non-limiting example, video processing algorithms may be configured to detect objects or activity in video data. Examples of objects include pets, objects in the house such as the refrigerator, front door of the house. Examples of activity include actions performed by people or objects in the house such as running, walking, fighting, falling, opening/closing, and breaking.

In some aspects, one or more detected people, objects, and activity are provided as metadata (metadata 124) with video content to monitoring engine 340 for generating an event stream that aggregates video data and its associated metadata from one or more video monitoring devices. Monitoring engine 340 may be configured to organize event streams to display video streams based on detected events within each stream and that are prioritized based on user prioritization information.

According to some aspects, another example of a video processing algorithm includes image comparison algorithms over a particular time duration for detecting changes over time within video data and between video data provided by multiple video monitoring devices. Image comparison algorithms enable the determination of, for example, direction of motion and the type of motion detected within video data.

In embodiments with a single video monitoring device, video data over a particular time duration (e.g., 10 seconds, 30 seconds, 1 minute, 1 hour, 1 week) may include a person, object, or activity. For example, a person may be detected walking from left to right in the frame of the video data, or an object may be detected as changing places over the course of the recorded time duration. Image comparison algorithms may be configured to detect these changes in position, changes in movement, or direction of movement within the particular video data provided by the single video monitoring device by comparing video data that spans the particular time duration.

In embodiments with multiple video monitoring devices, video data over a particular time duration may include a person, object, or activity that spans video data provided by the multiple video monitoring devices. For example, a person may be detected in video data from video monitoring device 310a and in video data from video monitoring device 310b over a particular time duration. Image comparison algorithms may be configured to detect the event of the person walking from one room (associated with video monitoring device 310a) to another room (associated with video monitoring device 310b) based on this detected information. Monitoring devices may be associated with particular location identifiers within monitoring environment 300 to assist in performing the event detection of video data.

Image comparison algorithms of video data enable event detection over time durations which increases the accuracy of detecting particular events and providing event information that can be determined based on comparing video data over a time duration. Examples of events including activities such as walking or running in particular direction, or in particular locations within the environment.

Non-video monitoring devices, including non-video monitoring device 304a and non-video monitoring device 304b, can be configured with a monitoring sensor 321 for monitoring different types of non-video data including, audio, temperature, and power usage. Monitoring engine 340 can be configured to process the non-video data in combination with the video data as part of the event detection process. In some aspects, video data and non-video data are timestamped according to an accepted time source that is synced across devices within monitoring environment 300. Syncing times across monitoring device(s) 140 ensures that timestamps of video data and non-video data are synchronized even if they are provided by different monitoring device(s) 140. Monitoring engine 340 may utilize the time stamp information as part of generating an event stream by, for example, coordinating the video data and non-video data as part of detecting particular events in the video data. As one non-limiting example, monitoring engine 340 may utilize video processing algorithms on video data to detect a particular event, such as a door opening or a person walking through different rooms of the house. Non-video data can be synchronized with the video data based on timestamps to provide additional information for identifying the event. Non-video data, which can include information about whether a window or door is open, can be used to reinforce the event detection that is based only on the video data. So if non-video data for the door indicates that the door or window are open, monitoring engine 340 may confirm the event detected using the video data that the door or window are actually open. Monitoring engine 340 may then proceed in generating the event stream to include the identified event.

### Visualization Interface

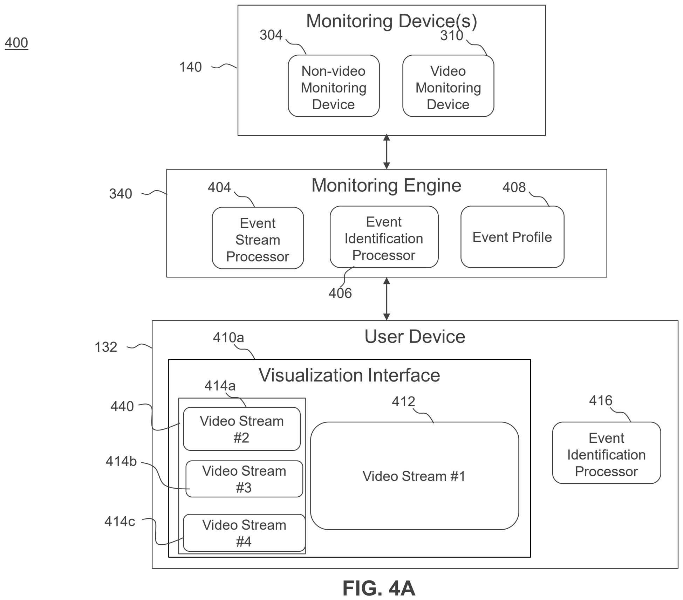

FIGs. 4A-4C illustrate exemplary communications and embodiments of the visualization interface for event-based display of video streams. Visualization interfaces can be implemented as a graphical user interface that is provided by a dedicated application installed on user device(s) 132. In some embodiments, visualization interfaces can also be implemented on media device 106 and the dedicated application is installed on media device 106 in addition to or alternatively to user device(s) 132. A dedicated application is software that is configured to communicate with monitoring engine 340 such that user device(s) 132 are unable to communicate with monitoring engine 340 (i.e., receive event streams) unless the software is installed.

FIG. 4A depicts system 400 with visualization interface 410a in communication with monitoring device(s) 140 and monitoring engine 340. Monitoring device(s) 140 may include multiple video monitoring devices such as video monitoring device 310 and non-video monitoring devices such as non-video monitoring device 304.

Monitoring device(s) 140 are configured to provide monitoring data, such as video streaming data from video monitoring device 310 and non-video data from non-video monitoring device 304, to monitoring engine 340. As noted above, event detection, using video processing techniques on video streaming data, may be implemented at monitoring device(s) 140, at monitoring engine 340, a combination of both (i.e., functions of event processing may be distributed between monitoring device(s) 140 and monitoring engine 340. For purposes of FIG. 4A, embodiments where monitoring engine 340 performs event detection are discussed.

Monitoring engine 340 receives monitoring data including video streaming data from monitoring device(s) 140. Monitoring engine 340 includes event stream processor 404, event identification processor 406, and event profile 408.

Event stream processor 404 is configured to perform one or more video processing algorithms on received video streaming data to identify events within the one or more video streams received from monitoring device 140. For example, event stream processor 404 is configured to perform one or more image recognition, audio recognition, facial recognition, biometric detection, and activity detection on the video streams. Event stream processor 404 is configured to generate event data such as any recognized images, recognized audio, and detected people, objects, and activities based on the processing steps.

Event stream processor 404 transmits information about detected events to event identification processor 406, which is configured to perform event identification based on the provided information. Event identification processor 406 can be configured to organize the event data received from event stream processor 404 into predefined events.

In some aspects, event identification processor 406 is further configured to communicate with event profile 408 to personalize the event detection based on specific people, objects, and activities that are stored in event profile. As noted above, event profile is associated with a user account that links monitoring device(s) 140 so that monitoring data from monitoring device(s) 140 can be aggregated into an event stream for display by visualization interface 410a.

Information from event profile 408 may personalize the predefined events to provide more granular prioritization of events. For example, predefined events may be generic events that could be applicable across many different accounts such as particular rooms (e.g., kitchen, bathroom), sounds (e.g., breaking glass, loud noises such as crashes), or activities (e.g., falling, running). Event identification processor 406 is configured to personalize these generic events to identify events that are specific to a particular user account. Personalizing the generic events includes associating particular people (e.g., family members), objects (e.g., dog), or activities (e.g., kids returning from school at a specific time as specified by a schedule) with an event.

User device 132 is configured to generate and display visualization interface 410a based on event streams provided by monitoring engine 340. As noted above, although FIG. 4A describes user device(s) 132 as displaying visualization interface 410a, the following discussion also can apply to media device(s) 106.

Visualization interface 410a can be configured with primary viewing area 412 for displaying video streams with a higher priority than other video streams that are included in the event stream. Visualization interface 410 can also be configured with a secondary viewing area 440 that include secondary windows 414a, 414b, and 414c for displaying video streams that have a lower priority than other video streams in the event stream. Visualization interface 410b may organize display of video streams based on priority assigned to each stream (e.g., based on detected events) with primary viewing area 412 may be configured to display video streams with a highest priority amongst the other video streams in the event stream. Primary viewing area 412 is a window for displaying video streams and may be physically configured, such as via increased size or increased color, to visually indicate that the video stream within primary viewing area 412 is highest priority over other video streams within the event stream. Secondary viewing area 440 may include any number of secondary windows depending on the number of remaining video streams within the event stream. In some embodiments, visualization interface 410a may be configured with only a primary viewing area 412 to display the video stream with the highest priority event.

In some embodiments, user device(s) 132 can be configured with an event identification processor 416 that operates instead of or in addition to event processor 406.

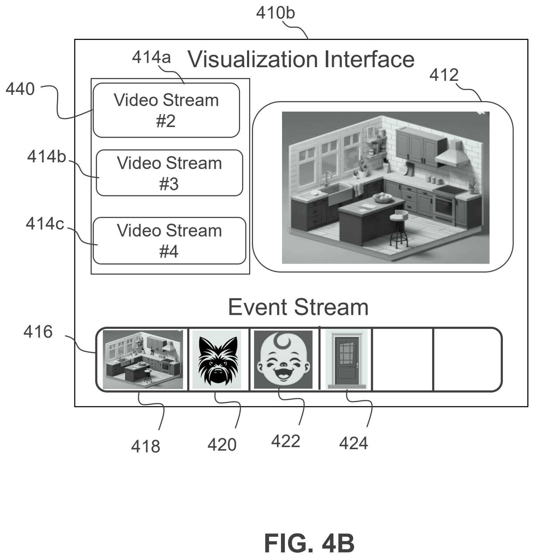

FIG. 4B depicts an alternative embodiment of a visualization interface, visualization interface 410b which can be configured to display a visual event stream 416, which is configured to display visual indicators associated with events identified in the event stream provided by monitoring engine 340. Visual event stream 416 may include selectable visual indicators, such as icons or the like, associated with different events identified in the event stream, and that are being displaying in primary viewing area 412 and secondary viewing area 440 including secondary windows 414a, 414b, and 414c.

Visual event stream 416 may configured to display selectable event icons that are associated with different types of events identified in the event stream. The icons shown in FIG. 4B are merely exemplary and do not limit the type of indicators that may be displayed in visual event stream 416. Non-limiting examples of selectable event icons include a room identifier 418 (e.g., a kitchen), an object identifier 420 (e.g., a dog), a person identifier 422 (e.g., a baby), and an activity identifier 424 (e.g., an open door). Visualization interface 410b is configured to switch between video streams based on detected events within the event stream and that are visually indicated in visual event stream 416. Switching between video streams may occur automatically or manually (e.g., via manual selection of room identifier 418, an object identifier 420, a person identifier 422, and an activity identifier 424). Switching of video streams may result in changing which video stream is displayed within primary viewing area 412. For example, a manual selection of activity identifier 424 would cause the video stream having the detected event associated with the activity identifier 424 to be displayed in primary viewing area 412.

Automatic switching of video streams may occur based on analysis of event stream 416. For example, user device(s) 132 (or event identification processor 416) may be configured to monitor event stream 416 which is continuously updated as new events are detected by monitoring engine 340. In this manner, monitoring engine 340 streams event data to visualization interface 410b which results in event stream 416 to be continuously updated with the new events. Analysis of event stream 416 includes determining the prioritization information associated with each event currently indicated by event stream 416. As new events are added or old events are removed from event stream 416, visualization interface 410b continuously determines which events within event stream 416 has the highest priority, and updates primary viewing area 412 (to show the video stream with the highest priority event) and secondary viewing area 440 (to show the remaining video streams) accordingly. Automatic switching may take into detected event types and user prioritization information regarding how to prioritize the different events based on their type. For example, certain family given members, such as babies, can be given higher priority. As another example, certain activities such as an open door during a period of time when no one is home (e.g., as determined by a family schedule specified in the event profile 408), can also be given higher priority.

In some aspects, event stream 416 may be considered a continuous event stream that is updated to display new selectable event icons to indicate new detected events within the video streams, to remove old selectable event icons to indicate that events are no longer present in the provided video streams.

The visual indicators are intended to serve as a mechanism for quickly identifying the event type of events that are currently being displayed within visualization interface 410b and provide a selectable mechanism for manually switching between different events that are occurring within the event stream. That is, instead of selecting particular video streams or video monitoring devices, visualization interface 410b provides a means for organizing and selecting video streams based on selected events using the selectable event icons.

In some embodiments, monitoring engine 340 may include a visual language model that is trained to map detected events and their corresponding event types with particular visual indicators. The visual language model may be trained based on information in event profile 408 which include user-specific information including, predefined people (e.g., family members), media such as images or audio of the predefined people, family schedules (e.g., work schedule, school schedules), and settings associated with monitoring environment 300, such as room-specific rules or preferences (e.g., no events should be detected in the bathrooms or windows, running or other physical activities are acceptable in the basement).

In some aspects, event stream 416 may be implemented as a real-time event stream configured to display events that are detected in real-time in video streams. A real-time event stream may be updated with new selectable event icons as new events are detected or to remove old selectable event icons as old events are no longer detected. In some aspects, event stream 416 may be implemented as event logging stream configured to display events from a particular time duration. For example, visualization interface 410b may be configured to display recorded events over the span of a time duration (e.g., 10 minutes, 1 hour, 1 day). In this aspect, event stream 416 is static such that the selectable event icons displayed in event stream 416 are not updated or changed. Instead, the selectable event icons of an event logging stream depicts the detected events for that particular time duration. Selection of the particular selectable event icon will cause the stored video stream that includes the event associated with the selected event icon to be displayed by visualization interface (e.g., in primary viewing window 412).

In some aspects, visualization interface 410b may include both implementations of event stream 416 to view real-time events and logged events.

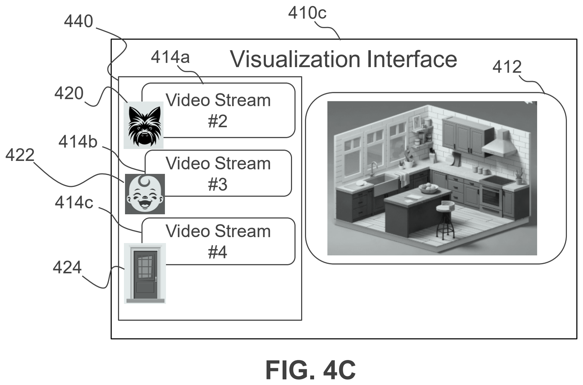

FIG. 4C depicts an alternative embodiment of a visualization interface, visualization interface 410c which can be configured to display selectable event icons, such as an object identifier 420, a person identifier 422, and an activity identifier 424, in proximity to the viewing areas within visualization interface 410c. For example, object identifier 420 may be displayed in proximity to secondary window 414a when a video stream that includes the detected object (e.g., a dog). Person identifier 422 and activity identifier 424 may be similarly displayed in proximity to secondary window 414b and secondary window 414c, respectively, based on the video streams displayed in those windows including the detected person or activity.

### Exemplary Personalized Event Stream

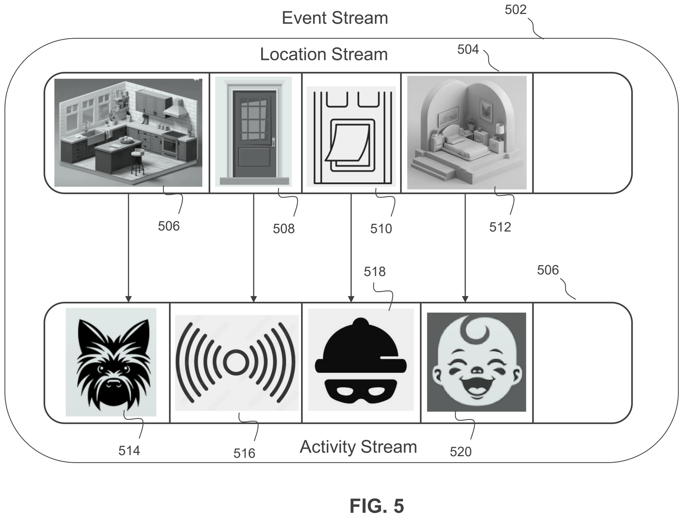

FIG. 5 illustrates an exemplary personalized visual event stream 502 that may be configured with a location stream 504 and activity stream 506. Personalized visual event stream 500 may be configured to include events and visual indicators that are specific to a user account. For example, location stream 504 may be configured to display selectable event icons that are associated with specific locations as provided by event profile 408 that is associated with the user account. Non-limiting examples of selectable event icons for locations in location stream 504 may include specific room identifiers, such as a kitchen identifier 506, a front door identifier 508, a pet door identifier 510, and a bedroom identifier 512.

Activity stream 506 may be configured to display selectable event icons that are associated with specific people, objects, or activities as provided by event profile 408. Non-limiting examples of selectable event icons for people, objects, or activities in activity stream 506 may include specific identifiers, such as object identifier 514, noise identifier 516, anomalous activity identifier 518, and person identifier 520.

In some aspects, event stream 502 may further include links between location stream 504 and activity stream 506 to assists in determining priority of events for display by a visualization interface. In an exemplary embodiment of FIG. 5, kitchen identifier 506 is linked to object identifier 514 to indicate the detection of the object associated with the object identifier 514 in the particular location (i.e., kitchen) indicated by kitchen identifier 506. Similarly, front door identifier 508 can be linked to a noise identifier 516 to indicate a noise or related event was detected by the front door, pet door identifier 510 can be linked to an anomalous activity identifier 518 to indicate unknown activity at the pet door, and bedroom identifier 512 can be linked to person identifier 520 to indicate the person was detected in the bedroom.

In some aspects, anomalous activity identifier 518 may be used to indicate any events that cannot be identified based on the currently available video data and user prioritization information. This may include unknown people (e.g., not identified by event profile 408) or unexpected activity (e.g., movement in rooms when a schedule indicates that no one should be home).

Monitoring engine 340 is configured to generate location stream 504 based on correlating video streams with locations of video monitoring device 310 that provided the respective video stream. For example, monitoring engine 340 may be configured to identify that a video stream is provided by a video monitoring device that is located or otherwise monitoring the kitchen within the monitoring environment. Visual language model may be used to identify selectable event icons associated with detected event data including the event type, the location of the event, and the detected people, objects, or activities within the event data.

### Methods for Event-Based Display of Video Streams

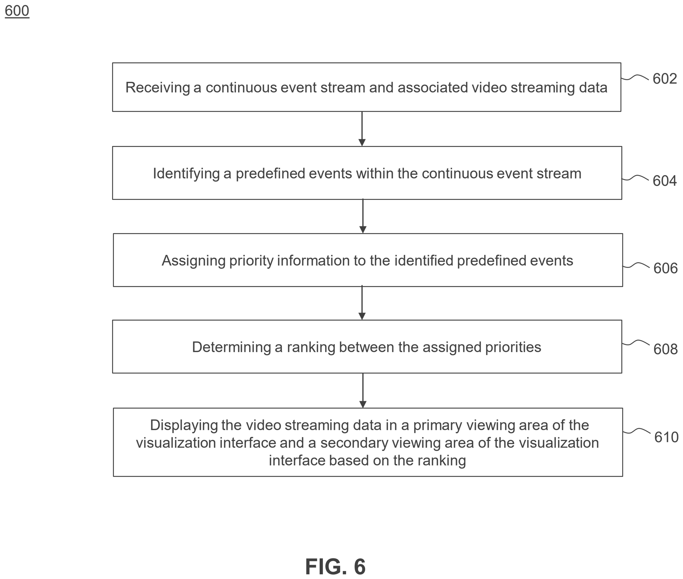

FIG. 6 is a flowchart illustrating a method 600 for intelligent event-based display of video streams within a monitoring environment, according to some aspects. Method 600 can be performed by processing logic that can comprise hardware (e.g., circuitry, dedicated logic, programmable logic, microcode, etc.), software (e.g., instructions executing on a processing device), or a combination thereof. As a non-limiting example of FIGS. 1-5, one or more functions described with respect to FIG. 6 may be performed by a user device (e.g., user device(s) 132), a media device (e.g., media device 106 of FIG. 1), and/or a display device (e.g., display device 104 of FIG. 1). In such an embodiment, any of these components may execute code in memory to perform certain steps of method 600 of FIG. 6. While content method 600 of FIG. 6 will be discussed below as being performed by certain components of multimedia environment 102, other components may store the code and therefore may execute method 600 by directly executing the code. Accordingly, the following discussion of method 600 will refer to components of FIGs. 1-5 as exemplary non-limiting embodiments. Moreover, it is to be appreciated that not all steps may be needed to perform the disclosure provided herein. Further, some of the functions may be performed simultaneously, in a different order, or by the same components than shown in FIG. 6, as will be understood by a person of ordinary skill in the art.

In step 602, a visualization device with a visualization interface receives a continuous event stream and associated video streaming data from a monitoring system. In some aspects, the visualization device may be implemented as user device(s) 134 or media device(s) 106 in communication with display device 108. The continuous event stream includes event data associated with events that are detected in the plurality of video streaming data. In some aspects, a monitoring engine, such as monitoring engine 340 is configured to generate the continuous event stream that includes the event data. The associated video streaming data includes video data provided by multiple video monitoring devices within a monitoring environment 300 and that are linked with each other via a user account.

In some aspects, the continuous event stream represents a real-time representation of detected events of video streaming data. A real-time representation means that the events included in the continuous event stream may be considered to be occurring concurrently with the display of the video streaming data by the visualization interface. The continuous event stream may be continuously updated, such as by monitoring engine 340, as new events are detected in video streams provided by monitoring device(s) and old events are no longer detected.

In some aspects, the number of video streams may change (i.e., increase or decrease) while the visualization interface receives the continuous event stream. Video streams may be provided to visualization interface as long as events are detected within the video stream and video streams can be dropped from visualization interface (i.e., no longer transmitted to the visualization device) as events are no longer detected within the respective stream.

Visualization interface is therefore configured to receive and display a variable amount of video streams from monitoring engine 340 that changes based on the condition that events are detected within each of the streams. Visualization interface may update its viewing windows based on the number of video streams. For example, continuous event stream may initially indicate events detected within two video streams. Visualization interface is configured to display the video streams within its viewing windows such as based on the priority of detected events within each respective video stream. While the two video streams are displayed by visualization interface, monitoring engine 340 may detect a new event, which may be detected as part of the two streams already being streamed to visualization interface or can be part of a new stream (e.g., from a different video monitoring device).

If the new event is detected within a new (i.e., third) video stream, then monitoring engine 340 is configured to update the continuous event stream to include the event data associated with the new event and to stream the new video stream to visualization interface. Visualization interface may detect the new event within the continuous event stream and the new video stream, and update the display of the initial two video streams to include the new third video stream. Visualization interface is configured to process the event data to determine a priority of the detected events within the continuous event stream (or this may be provided by monitoring engine 340) and then update the display of the video streams to display the video stream with the higher priority event in a primary viewing area of the visualization interface.

If the new event is detected within a video stream already streaming to visualization interface, visualization interface may process the new event data provided in the continuous event stream to determine whether the new event data necessitates any changes to displaying the two video streams, such by switching streams to display the stream with the higher priority event in the primary viewing area of the visualization interface.

In step 604, monitoring engine or a component thereof (e.g., an event identification processor in monitoring engine 340) may be configured to identify predefined events within the continuous event stream. The predefined events within the continuous event stream are associated with events that are directed within the video streaming data. In some embodiments, visualization interface may perform this step in addition to or instead of event identification processor.

In step 606, monitoring engine or a component thereof (e.g., an event identification processor in monitoring engine 340) may be configured to determine priority information associated with each of the events provided in the continuous event stream. This can include assigning priorities to the events based on user prioritization information which enables the event detection and prioritization to be personalized based on predefined people, objects, or activities. In some embodiments, visualization interface may perform this step in addition to or instead of event identification processor.

In step 608, monitoring engine or a component thereof (e.g., an event identification processor in monitoring engine 340) may be configured to determine a ranking between the priorities assigned to each event. In some aspects, the ranking may be based on user prioritization information which may include rules or conditions assigning priority levels to different detected events. In some embodiments, visualization interface may perform this step in addition to or instead of event identification processor.

In step 610, visualization interface is configured to display the video streaming data based on the ranked priority associated with each event. For example, an event detected in video streaming data can be determined to have a higher priority than another event detected in another video streaming data. Visualization interface is configured to display the video streaming data having the higher priority event in a primary viewing area of the visualization interface and the second video streaming data with the lower priority event in a secondary viewing area.

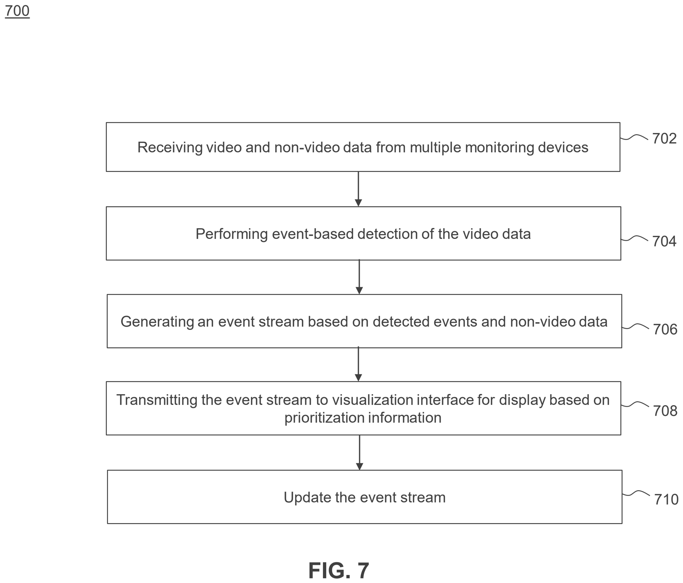

FIG. 7 is a flowchart illustrating a method 700 for generating an event stream based on video data from multiple monitoring devices, according to an embodiment. Method 700 can be performed by processing logic that can comprise hardware (e.g., circuitry, dedicated logic, programmable logic, microcode, etc.), software (e.g., instructions executing on a processing device), or a combination thereof. As a non-limiting example of FIGS. 1-5, one or more functions described with respect to FIG. 7 may be performed by a user device (e.g., user device(s) 132), a media device (e.g., media device 106 of FIG. 1), and/or a display device (e.g., display device 104 of FIG. 1). In such an embodiment, any of these components may execute code in memory to perform certain steps of method 700 of FIG. 7. While content method 700 of FIG. 7 will be discussed below as being performed by certain components of multimedia environment 102, other components may store the code and therefore may execute method 700 by directly executing the code. Accordingly, the following discussion of method 700 will refer to components of FIGs. 1-5 as exemplary non-limiting embodiments. Moreover, it is to be appreciated that not all steps may be needed to perform the disclosure provided herein. Further, some of the functions may be performed simultaneously, in a different order, or by the same components than shown in FIG. 7, as will be understood by a person of ordinary skill in the art.

In 702, monitoring engine 340 receives video data from multiple video monitoring devices. Monitoring engine 340 can be configured to receive and process the multiple video streams in parallel. For example, monitoring engine 340 may be configured with graphical processing unit with a parallel structure that is efficient and capable for parallel processing of large amounts of data, such as streaming video data.

In 704, monitoring engine 340 performs event-based detection on the video data. Monitoring engine 340 may be configured with video processing algorithms for performing event detection within video data, which can include image recognition, audio recognition, facial recognition, activity detection, and object detection features. In some aspects, monitoring engine 340 may implement a visual language model that is trained for processing video streaming data, including processing such video streaming data in parallel and for outputting event data detected within the video streaming data. The output event data may include visual and text information about detected people, objects, motion, activities, sounds, and activities, in the multiple video streams. Monitoring engine 340 can be configured to link the event data to the video streams provided by respective video monitoring devices so that event data can be correlated to the video stream in which the event was detected.

In 706, monitoring engine 340 generates a continuous event stream based on the event data, and, in some embodiments, non-video data including information from an event profile associated with an account that is linked to monitoring device(s) 140. The event data in continuous event stream may include information about the detected event, such as event type, detected objects, detected people, detected sounds, or detected activity, which include both visual and textual information about the detected event. In some embodiments, selectable event icons associated with the event type may also be included in the continuous event stream. Visualization interface can be configured to utilize the selectable event icons within visual event stream to indicate the events that are being provided in the video streams that are currently being streamed by monitoring engine 340.

In 708, monitoring engine 340 formats the continuous event stream and streams the formatted event stream and associated video streams to the visualization interface, which can be implemented at user device(s) 132 or media device 106.

In 710, monitoring engine 340 is configured to continuously update the continuous event stream and video streams being streamed to visualization interface as new events are detected or as old event are no longer detected in the video streams. For example, monitoring engine 340 is continuously performing event detection on video streams being provided by monitoring device(s) 140 and updating the continuous event stream based on the results of the continuous event detection.

FIG. 7 represents method 700 for providing real-time visualization of events currently detected in video streams being streamed to visualization information. As discussed above, other embodiments of providing event visualization by visualization information include providing visualization of logged (i.e., not real-time) events. In this manner, monitoring engine 340 may be configured to provide a stored event stream to visualization interface for displaying events detected over a particular time duration. Stored event stream differs from continuous event stream in that stored event stream provides event data for events that have previously occurred and are currently stored. The stored event stream may implemented in a similar manner to include selectable event icons that indicate the events that are detected within the video streams for the particular time duration.

In some embodiments, the stored event stream may be organized based on time duration for all monitoring device(s) 140, for specific monitoring devices (e.g., only video doorbells), or for particular locations (e.g., a specific room) within monitoring environment 300.

### Example Computer System

Various aspects may be implemented, for example, using one or more well-known computer systems, such as computer system 800 shown in FIG. 8. For example, the media device 86 may be implemented using combinations or sub-combinations of computer system 800. Also or alternatively, one or more computer systems 800 may be used, for example, to implement any of the aspects discussed herein, as well as combinations and sub-combinations thereof.

Computer system 800 may include one or more processors (also called central processing units, or CPUs), such as a processor 804. Processor 804 may be connected to a communication infrastructure or bus 806.

Computer system 800 may also include user input/output device(s) 803, such as monitors, keyboards, pointing devices, etc., which may communicate with communication infrastructure 806 through user input/output interface(s) 802.

One or more of processors 804 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 800 may also include a main or primary memory 808, such as random access memory (RAM). Main memory 808 may include one or more levels of cache. Main memory 808 may have stored therein control logic (i.e., computer software) and/or data.

Computer system 800 may also include one or more secondary storage devices or memory 810. Secondary memory 810 may include, for example, a hard disk drive 812 and/or a removable storage device or drive 814. Removable storage drive 814 may be a floppy disk drive, a magnetic tape drive, a compact disk drive, an optical storage device, tape backup device, and/or any other storage device/drive.

Removable storage drive 814 may interact with a removable storage unit 818. Removable storage unit 818 may include a computer usable or readable storage device having stored thereon computer software (control logic) and/or data. Removable storage unit 818 may be a floppy disk, magnetic tape, compact disk, DVD, optical storage disk, and/ any other computer data storage device. Removable storage drive 814 may read from and/or write to removable storage unit 818.

Secondary memory 810 may include other means, devices, components, instrumentalities or other approaches for allowing computer programs and/or other instructions and/or data to be accessed by computer system 800. Such means, devices, components, instrumentalities or other approaches may include, for example, a removable storage unit 822 and an interface 820. Examples of the removable storage unit 822 and the interface 820 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 800 may further include a communication or network interface 824. Communication interface 824 may enable computer system 800 to communicate and interact with any combination of external devices, external networks, external entities, etc. (individually and collectively referenced by reference number 828). For example, communication interface 824 may allow computer system 800 to communicate with external or remote devices 828 over communications path 826, which may be wired and/or wireless (or a combination thereof), and which may include any combination of LANs, WANs, the Internet, etc. Control logic and/or data may be transmitted to and from computer system 800 via communication path 826.

Computer system 800 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 800 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 800 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some aspects, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 800, main memory 808, secondary memory 810, and removable storage units 818 and 822, as well as tangible articles of manufacture embodying any combination of the foregoing. Such control logic, when executed by one or more data processing devices (such as computer system 800 or processor(s) 804), may cause such data processing devices to operate as described herein.

Based on the teachings contained in this disclosure, it will be apparent to persons skilled in the relevant art(s) how to make and use aspects of this disclosure using data processing devices, computer systems and/or computer architectures other than that shown in FIG. 8. In particular, aspects can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary aspects as contemplated by the inventor(s), and thus, are not intended to limit this disclosure or the appended claims in any way.

While this disclosure describes exemplary aspects for exemplary fields and applications, it should be understood that the disclosure is not limited thereto. Other aspects and modifications thereto are possible, and are within the scope and spirit of this disclosure. For example, and without limiting the generality of this paragraph, aspects are not limited to the software, hardware, firmware, and/or entities illustrated in the figures and/or described herein. Further, aspects (whether or not explicitly described herein) have significant utility to fields and applications beyond the examples described herein.

Aspects have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative aspects can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other aspects whether or not explicitly mentioned or described herein. Additionally, some aspects can be described using the expression "coupled" and "connected" along with their derivatives. These terms are not necessarily intended as synonyms for each other. For example, some aspects can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary aspects, but should be defined only in accordance with the following claims and their equivalents.

### Numbered aspects

By way of non-limiting example, some aspects of the disclosure are set out in the following numbered clauses.
Numbered Clause 1. A computer-implemented method for configuring, on a user device, a visualization interface for displaying a plurality of video streaming data provided by a plurality of monitoring devices of a monitoring system, comprising:
   receiving, by at least one computer processor on the user device from the monitoring system, a continuous event stream, wherein the continuous event stream comprising detected events within the plurality of video streaming data, and wherein the plurality of video streaming data comprises first video streaming data associated with a first video monitoring device of the plurality of monitoring devices and second video streaming data associated with a second video monitoring device of the plurality of monitoring devices;
   identifying, by an event identification processor in communication with the visualization interface, a first predefined event in the continuous event stream and a second predefined event in the continuous event stream;
   assigning, by the event identification processor and based on user prioritization information, a first priority to the first predefined event and a second priority to the second predefined event;
   determining a ranking between the first priority and the second priority; and
   displaying, based on the ranking, the first video streaming data in a primary viewing area of the visualization interface and the second video streaming data in a secondary viewing area of the visualization interface.
Numbered Clause 2. The computer-implemented method of Numbered Clause 1, wherein the user device comprises at least one of a media device connected to a display device and a mobile device comprising a video monitoring application configured to communicate with the monitoring system.
Numbered Clause 3. The computer-implemented method of Numbered Clause 1 or 2, wherein the plurality of monitoring devices further comprises at least one non-video monitoring device.
Numbered Clause 4. The computer-implemented method of Numbered Clause 3, wherein the non-video monitoring device comprises at least one of a motion detector, a sound detector, and a smart plug.
Numbered Clause 5. The computer-implemented method of any preceding Numbered Clause, wherein the user prioritization information comprises a ranked list of a plurality of predefined events, wherein the plurality of predefined events comprises the first predefined event and the second predefined event.
Numbered Clause 6. The computer-implemented method of any preceding Numbered Clause, wherein the continuous event stream is continuously streamed from the monitoring system to the user device, the method further comprising:
   subsequent to the user device receiving the continuous event stream receiving an updated event stream from the monitoring system, wherein the updated event stream incorporates third video streaming data from a third video monitoring device with the first video streaming data and the second video streaming data, wherein the updated event stream is received by the user device without interrupting the display of the first video streaming data in the primary viewing area of the visualization interface and the second video streaming data in the secondary viewing area of the visualization interface, and wherein the secondary viewing area comprises a plurality of secondary windows;
   identifying, by the event identification processor, a third predefined event in the third video streaming data;
   assigning, by the event identification processor and based on the user prioritization information, a third priority to the third predefined event;
   determining that the third priority is higher than the first priority; and
   updating, based on the determining, the visualization interface to display the third video streaming data in the primary viewing area, the first video streaming data in a first secondary window of the secondary viewing area, and the second video streaming data in a second secondary window of the secondary viewing area.
Numbered Clause 7. The computer-implemented method of any preceding Numbered Clause, further comprising:
   identifying a first selectable visual icon associated with the first predefined event and a second selectable visual icon associated with the second predefined event;
   displaying, on the visualization interface, the first selectable visual icon and the second selectable visual icon;
   receiving a selection of the second selectable visual icon; and
   updating, based on the selection, the visualization interface to display the second video streaming data in the primary viewing area and the first video streaming data in the secondary viewing area 440.
Numbered Clause 8. The computer-implemented method of any preceding Numbered Clause, wherein the first predefined event comprises an event location and an activity identifier, wherein the event location identifies a first location associated with the first video monitoring device and the activity identifier indicates a type of activity identified by the first predefined event.
Numbered Clause 9. The computer-implemented method of any preceding Numbered Clause, further comprising:
   identifying, while the first streaming video data is displayed on the primary viewing area and the second streaming video data is displayed on the secondary viewing area 440, a third predefined event in the second streaming video data;
   assigning, by the event identification processor and based on the user prioritization information, a third priority to the third predefined event;
   determining that the third priority is higher than the first priority; and
   updating, based on the determining, the visualization interface to display the second video streaming data in the primary viewing area and, the first video streaming data in the secondary viewing area 440.
Numbered Clause 10. A media device for configuring, on a user device, a visualization interface for displaying a plurality of video streaming data provided by a plurality of monitoring devices of a monitoring system, comprising:
   one or more memories;
   at least one processor each coupled to at least one of the memories and an event identification processor, and configured to perform operations comprising:
      receiving, from the monitoring system, a continuous event stream, wherein the continuous event stream comprises detected events in the plurality of video streaming data, and wherein the plurality of video streaming data comprises first video streaming data associated with a first video monitoring device of the plurality of monitoring devices and second video streaming data associated with a second video monitoring device of the plurality of monitoring devices;
      identifying a first predefined event in the first video streaming data and a second predefined event in the second video streaming data;
      assigning, based on user prioritization information, a first priority to the first predefined event and a second priority to the second predefined event;
      determining a ranking between the first priority and the second priority; and
      displaying, based on the ranking, the first video streaming data in a primary viewing area of the visualization interface and the second video streaming data in a secondary viewing area of the visualization interface.
Numbered Clause 11. The media device of Numbered Clause 10, wherein the user device comprises at least one of a media device connected to a display device and a mobile device comprising a video monitoring application configured to communicate with the monitoring system.
Numbered Clause 12. The media device of Numbered Clause 10 or 11, wherein the plurality of monitoring devices further comprises at least one non-video monitoring device.
Numbered Clause 13. The media device of Numbered Clause 12, wherein the non-video monitoring device comprises at least one of a motion detector, a sound detector, and a smart plug.
Numbered Clause 14. The media device of any of Numbered Clauses 10 to 13, wherein the user prioritization information comprises a ranked list of a plurality of predefined events, wherein the plurality of predefined events comprises the first predefined event and the second predefined event.
Numbered Clause 15. The media device of any of Numbered Clauses 10 to 14, wherein the processor is further configured to:
   identify, while the first streaming video data is displayed on the primary viewing area and the second streaming video data is displayed on the secondary viewing area, a third predefined event in the continuous event stream;
   assign, based on the user prioritization information, a third priority to the third predefined event;
   determine that the third priority is higher than the first priority; and
   updating, based on the determining, the visualization interface to display the second video streaming data in the primary viewing area and, the first video streaming data in the secondary viewing area.
Numbered Clause 16. The media device of any of Numbered Clauses 10 to 15, wherein the processor is further configured to:
   identify a first selectable visual icon associated with the first predefined event and a second selectable visual icon associated with the second predefined event;
   display, on the visualization interface, the first selectable visual icon and the second selectable visual icon;
   receive a selection of the second selectable visual icon; and
   update, based on the selection, the visualization interface to display the second video streaming data in the primary viewing area and the first video streaming data in the secondary viewing area.
Numbered Clause 17. The media device of any of Numbered Clauses 10 to 16, wherein the first predefined event comprises an event location and an activity identifier, wherein the event location identifies a first location associated with the first video monitoring device and the activity identifier indicates a type of activity identified by the first predefined event.
Numbered Clause 18. The media device of any of Numbered Clauses 10 to 17, wherein the processor is further configured to:
   identify, while the first streaming video data is displayed on the primary viewing area and the second streaming video data is displayed on the secondary viewing area, a third predefined event in the continuous event stream;
   assign, based on the user prioritization information, a third priority to the third predefined event;
   determine that the third priority is higher than the first priority; and
   update, based on the determining, the visualization interface to display the second video streaming data in the primary viewing area and, the first video streaming data in the secondary viewing area 440.
Numbered Clause 19. A non-transitory computer-readable medium having instructions stored thereon that, when executed by at least one computing device, cause the at least one computing device to perform operations for configuring, on a user device, a visualization interface for displaying a plurality of video streaming data provided by a plurality of monitoring devices of a monitoring system, the operations comprising:
   receiving, by the visualization interface from the monitoring system, a continuous event stream, wherein the continuous event stream comprises detected events in the plurality of video streaming data, and wherein the plurality of video streaming data comprises first video streaming data associated with a first video monitoring device of the plurality of monitoring devices and second video streaming data associated with a second video monitoring device of the plurality of monitoring devices;
   identifying, by an event identification processor in communication with the visualization interface, a first predefined event in the first video streaming data and a second predefined event in the second video streaming data;
   assigning, by the event identification processor and based on user prioritization information, a first priority to the first predefined event and a second priority to the second predefined event;
   determining a ranking between the first priority and the second priority; and
   displaying, based on the ranking, the first video streaming data in a primary viewing area of the visualization interface and the second video streaming data in a secondary viewing area of the visualization interface.
20. The non-transitory computer-readable medium of Numbered Clause 19, wherein the user device comprises at least one of a media device connected to a display device and a mobile device comprising a video monitoring application configured to communicate with the monitoring system.

## Claims

1. A computer-implemented method for configuring, on a user device, a visualization interface for displaying a plurality of video streaming data provided by a plurality of monitoring devices of a monitoring system, comprising:
receiving, by at least one computer processor on the user device from the monitoring system, a continuous event stream, wherein the continuous event stream comprising detected events within the plurality of video streaming data, and wherein the plurality of video streaming data comprises first video streaming data associated with a first video monitoring device of the plurality of monitoring devices and second video streaming data associated with a second video monitoring device of the plurality of monitoring devices;
identifying, by an event identification processor in communication with the visualization interface, a first predefined event in the continuous event stream and a second predefined event in the continuous event stream;
assigning, by the event identification processor and based on user prioritization information, a first priority to the first predefined event and a second priority to the second predefined event;
determining a ranking between the first priority and the second priority; and
displaying, based on the ranking, the first video streaming data in a primary viewing area of the visualization interface and the second video streaming data in a secondary viewing area of the visualization interface.

2. The computer-implemented method of claim **1,** wherein the user device comprises at least one of a media device connected to a display device and a mobile device comprising a video monitoring application configured to communicate with the monitoring system.

3. The computer-implemented method of claim 1 or 2, wherein the plurality of monitoring devices further comprises at least one non-video monitoring device, preferably wherein the non-video monitoring device comprises at least one of a motion detector, a sound detector, and a smart plug.

4. The computer-implemented method of any preceding claim, wherein the user prioritization information comprises a ranked list of a plurality of predefined events, wherein the plurality of predefined events comprises the first predefined event and the second predefined event.

5. The computer-implemented method of any preceding claim, wherein the continuous event stream is continuously streamed from the monitoring system to the user device, the method further comprising:
subsequent to the user device receiving the continuous event stream receiving an updated event stream from the monitoring system, wherein the updated event stream incorporates third video streaming data from a third video monitoring device with the first video streaming data and the second video streaming data, wherein the updated event stream is received by the user device without interrupting the display of the first video streaming data in the primary viewing area of the visualization interface and the second video streaming data in the secondary viewing area of the visualization interface, and wherein the secondary viewing area comprises a plurality of secondary windows;
identifying, by the event identification processor, a third predefined event in the third video streaming data;
assigning, by the event identification processor and based on the user prioritization information, a third priority to the third predefined event;
determining that the third priority is higher than the first priority; and
updating, based on the determining, the visualization interface to display the third video streaming data in the primary viewing area, the first video streaming data in a first secondary window of the secondary viewing area, and the second video streaming data in a second secondary window of the secondary viewing area.

6. The computer-implemented method of any preceding claim, further comprising:
identifying a first selectable visual icon associated with the first predefined event and a second selectable visual icon associated with the second predefined event;
displaying, on the visualization interface, the first selectable visual icon and the second selectable visual icon;
receiving a selection of the second selectable visual icon; and
updating, based on the selection, the visualization interface to display the second video streaming data in the primary viewing area and the first video streaming data in the secondary viewing area 440.

7. The computer-implemented method of any preceding claim, wherein the first predefined event comprises an event location and an activity identifier, wherein the event location identifies a first location associated with the first video monitoring device and the activity identifier indicates a type of activity identified by the first predefined event.

8. The computer-implemented method of any preceding claim, further comprising:
identifying, while the first streaming video data is displayed on the primary viewing area and the second streaming video data is displayed on the secondary viewing area 440, a third predefined event in the second streaming video data;
assigning, by the event identification processor and based on the user prioritization information, a third priority to the third predefined event;
determining that the third priority is higher than the first priority; and
updating, based on the determining, the visualization interface to display the second video streaming data in the primary viewing area and, the first video streaming data in the secondary viewing area 440.

9. A media device for configuring, on a user device, a visualization interface for displaying a plurality of video streaming data provided by a plurality of monitoring devices of a monitoring system, comprising:
one or more memories;
at least one processor each coupled to at least one of the memories and an event identification processor, and configured to perform operations comprising:
receiving, from the monitoring system, a continuous event stream, wherein the continuous event stream comprises detected events in the plurality of video streaming data, and wherein the plurality of video streaming data comprises first video streaming data associated with a first video monitoring device of the plurality of monitoring devices and second video streaming data associated with a second video monitoring device of the plurality of monitoring devices;
identifying a first predefined event in the first video streaming data and a second predefined event in the second video streaming data;
assigning, based on user prioritization information, a first priority to the first predefined event and a second priority to the second predefined event;
determining a ranking between the first priority and the second priority; and
displaying, based on the ranking, the first video streaming data in a primary viewing area of the visualization interface and the second video streaming data in a secondary viewing area of the visualization interface.

10. The media device of claim 9, wherein the user device comprises at least one of a media device connected to a display device and a mobile device comprising a video monitoring application configured to communicate with the monitoring system.

11. The media device of claim 9 or 10, wherein the plurality of monitoring devices further comprises at least one non-video monitoring device, preferably wherein the non-video monitoring device comprises at least one of a motion detector, a sound detector, and a smart plug.

12. The media device of any of claims 9 to 11, wherein the user prioritization information comprises a ranked list of a plurality of predefined events, wherein the plurality of predefined events comprises the first predefined event and the second predefined event.

13. The media device of any of claims 9 to 12, wherein the processor is further configured to:
identify, while the first streaming video data is displayed on the primary viewing area and the second streaming video data is displayed on the secondary viewing area, a third predefined event in the continuous event stream;
assign, based on the user prioritization information, a third priority to the third predefined event;
determine that the third priority is higher than the first priority; and
updating, based on the determining, the visualization interface to display the second video streaming data in the primary viewing area and, the first video streaming data in the secondary viewing area
and/or
wherein the processor is further configured to:
identify a first selectable visual icon associated with the first predefined event and a second selectable visual icon associated with the second predefined event;
display, on the visualization interface, the first selectable visual icon and the second selectable visual icon;
receive a selection of the second selectable visual icon; and
update, based on the selection, the visualization interface to display the second video streaming data in the primary viewing area and the first video streaming data in the secondary viewing area
and/or
wherein the processor is further configured to:
identify, while the first streaming video data is displayed on the primary viewing area and the second streaming video data is displayed on the secondary viewing area, a third predefined event in the continuous event stream;
assign, based on the user prioritization information, a third priority to the third predefined event;
determine that the third priority is higher than the first priority; and
update, based on the determining, the visualization interface to display the second video streaming data in the primary viewing area and, the first video streaming data in the secondary viewing area 440.

14. The media device of any of claims 9 to 13, wherein the first predefined event comprises an event location and an activity identifier, wherein the event location identifies a first location associated with the first video monitoring device and the activity identifier indicates a type of activity identified by the first predefined event.

15. A non-transitory computer-readable medium having instructions stored thereon that, when executed by at least one computing device, cause the at least one computing device to perform operations for configuring, on a user device, a visualization interface for displaying a plurality of video streaming data provided by a plurality of monitoring devices of a monitoring system, the method of any of claims 1 to 8.
